# EUROPEAN PATENT SPECIFICATION

(11) **EP 2 882 671 B1**
(45) Date of publication and mention of the grant of the patent: **09.11.2016**
(21) Application number: 12780880.6
(22) Date of filing: 11.09.2012
(51) Int. Cl.: B65G 1/137

(54) **AUTOMATED STORAGE AND PICKING SYSTEM, ESPECIALLY FOR PHARMACEUTICS AND/OR DIETARY SUPPLEMENTS**
AUTOMATISCHES LAGER- UND KOMMISSIONIERUNGSSYSTEM, INSBESONDERE FÜR PHARMAZEUTISCHE PRODUKTE UND/ODER DIÄTISCHE SUPPLEMENTE
SYSTÈME AUTOMATISÉ DE STOCKAGE ET DE PRÉPARATION DE COMMANDES, EN PARTICULIER POUR DES PRODUITS PHARMACEUTIQUES ET/OU SUPPLÉMENTS DIÉTÉTIQUES

(30) Priority: 07.08.2012 PL 40028012
(43) Date of publication of application: 17.06.2015
(73) Proprietor: Nutrifarm SP. Z.O.O., 39 -200 Debica (PL)
(72) Inventor: JEDLINSKI, Marcin, PL-39-200 Debica (PL); JEDLINSKI, Rafal, PL-39-200 Debica (PL); SZTOGRIN, Artur, PL-39-200 Debica (PL)
(74) Representative: Górska, Anna
(86) International application number: PCT/PL2012/000088
(87) International publication number: WO 2014/025270

(56) References cited:
- EP-B1- 1 812 321
- DE-A1-102010 002 317
- US-A- 4 074 120

## Description

### Field of the invention

The invention is an automated system for storage and picking, especially for pharmaceuticals and/or dietary supplements, which is characterized by highly precise operation, reliability and safety. The invention refers to the field of transport, in particular, packaging, storage and handling of different materials, objects and unit packaging. In particular, the invention refers to a system of transport or storage mechanisms, as well as to transport of objects with two-dimensional code labelling inside a plant/factory and methods of their automatic identification.

The term "unit package" used in this patent specification should be understood in a very broad sense and it can be used interchangeably with terms such as "product" or "raw material".

### State of the art

The pharmaceutical and dietary supplement industries require a high degree of control and regulation. All processes have to be certified (e.g. according to Good Automated Manufacturing Practice, GAMP or Good Distribution Practice, GDP) and must be traceable to the end consumer (e.g. each product must be appropriately labelled so its manufacturing date and expiry date could be identified).

For those reasons the processes have to be reliable and traceable along the whole chain of production, delivery and distribution.

A number of various solutions to improve the process of product storage and picking is known from the prior art. For example, international patent application No. WO 2012/027741 A2 describes a storage and retrieval system used for pharmaceutical products applicable to storing and retrieving pharmaceutical containers, which relates to pharmaceutical dispensing system based on RFID tags, and the device described in the application includes a gantry operating in a coordinated manner, as well as racks and a set of user access and user authentication system. Another international patent application No. WO 2010/065845 A1 discloses a system for batching of pharmaceutical products such as solid drugs and dietary supplements, as well as a relevant process. This system, however, concerns the issue of medicine dispensing automation, and does not refer directly to a storage solution. International patent application No. WO 2009/086217 A2 describes a pharmaceutical storage system and the device according to the invention comprises housing, as well as at least one port with controlled access to stocks stored in the device, a robot transfer mechanism for transferring products and stock tracking software.

Another solution is known from Polish patent application P.390183 that refers to a method of transferring and identifying of: medicinal products or materials, foodstuff of special use, cosmetic, hygiene and wound dressing products or materials, in a process of storage from phase of entrance to the warehouse up to the phase of leaving from the dispatch warehouse, characterized by the fact that the outer packaging is tagged within a two- dimensional code. However, this system does not allow a precise determination of the position in a warehouse of unit packages of products according to the invention.

DE 10 2010 002 317 A1 discloses a system for separating and order picking articles, in particular pharmacy articles. Unfortunately, systems disclosed in the prior art do not allow picking of orders consisting of unit packaging of individual products, and only allow identification of larger outer packaging, and the process of order picking is difficult to be performed manually by a person of persons employed for this purpose. This results in an increased risk of error, which in the case of pharmaceuticals and/or dietary supplements can lead to serious consequences.

The present invention provides a highly reliable, traceable, fully automated solution from the storage area to the picking and dispatch area, with a direct information flow till the end customer, which is characterized by identifying unit packages using different two- dimensional codes for each product and the ability to eliminate errors in the picking process.

The advantage of this system is the ability to identify, at the place of storage, unit packages of products from the moment of entrance to the storage and unloading area, through warehousing up to the moment of order picking and dispatch of the ordered product to the customer. To facilitate automated operation of the storage and picking system and reliability of its operation, the present invention utilizes a unique combination of labelling: individual products are tagged with individual, unique two-dimensional (2D) codes identified by the picking device equipped with an adapter to read the 2D code of each unit package; outer packages are identified with bar codes; and the pallets are tagged and identified using RFID codes. The present invention is an automated storage and picking system, especially for pharmaceuticals and/or dietary supplements, consisting of:
a) storage unit packaged of goods placed in containers,
b) means of transport to enable the movement of goods within the storage space, in particular using a storage/ retrieval machine and
c) an automatic depalletizing system where a robot retrieves each container from the pallet, and places it on a conveyor system and identifies it, and subsequently the goods pass into the automated picking warehouse, equipped with a 3D scanner located above the conveyor belt integrated with a robot having an arm, which scans the containers to allow the robot to select unit packages from the containers and the robot empties the containers and puts the goods into the order boxes,
   wherein it has an integrated error control system, wherein each unit package is labelled with an individual two- dimensional code scanned from the top wall surface of the unit package by a 3D scanner, and if scanning of the two-dimensional code by the 3D scanner is not possible, the robot places the unit package in a control device that scans the two-dimensional code from the other walls of the unit package.

Each unit package of a finished product has a unique number encoded in a two- dimensional code, a specific set of numbered unit packages is placed in the outer package, which itself has a certain number encoded in a two-dimensional code that is assigned to a pallet labelled with a specific number using two-dimensional code labelling or a RFID tag.

In the preferred embodiment of the system according to the invention, the control device has the cuboid shape open on one side, preferably on the top, and two-dimensional code scanners are located in its walls.

In another embodiment, the error control system of the system of the present invention verifies the correct transfer of the goods to the automatic warehouse for replenishment via a telescopic fork located on the hoist unit of the storage/retrieval machine, thanks to the fact that the hoist unit is equipped with a RFID receiver which during the transfer of the goods is communicating with a RFID tag that is preferably placed on the pallet.

Preferably, the error control system verifies the correct picking due to the fact that the robot automatically identifies containers using a two-dimensional code located on the container.

Also preferably, the position of each unit package and/or pallet and/or storage container is recorded in a computer system, and more preferably, the computer system allows end- customer or internal customer to obtain information on a unit package of the product, preferably via the Internet.

The present invention is equipped with a modern IT system for automatic and dynamic decision making, including automatic prioritization of tasks such as unloading of a pallet in the case of finished product arriving directly into the picking area or sending a pallet to the automatic pallet storage area. Of course, the system itself must be an advanced system with built-in functions of control and monitoring of deviations in the adopted procedures/ rocesses/ tasks. Transport operations are also managed by an advanced system linked online with mobile applications of cargo carriers and end-users in order to increase the speed of information flow and to reduce transport costs.

This allows streamlining of the process of receiving goods by a business client, in particular with regard to the so-called pallet mixes (when there is more than one type of goods on the pallet). The 2D code label placed on the pallet contains all information related to the goods on the pallet, including pallet number (range 1 to, type (index) and quantity of goods on the pallet, batch/lot, expiry date, individual numbers of outer packaging) the customer can be provide with information about the numbers of unit packages. So we get some kind of packing list, but stored in a 2D code, and it is possible to quickly read large amounts of information at the same time with a mobile device equipped with a 2D code reader and then process this information with a computer system. Sharing the data that had been read using a mobile terminal with a 2D code reader allows quick identification of the goods type, quantity, batch/lot number, expiry date of the order and such as in previously received electronic storage document. This can go further and the storage document in an electronic form can contain package numbers (both outer and unit package). This will improve the accuracy of acceptance and security of goods (the same package numbers, delivery, pallet, carton, outer packaging, unit packaging that came out of the warehouse (their reception needs to be confirmed by the customer). All data is stored on the electronic storage document and after approval by the warehouse is sent online to the customer. Upon delivery the customer's computer system compares the data received electronically with the goods delivery (which is accepted using a mobile terminal with two-dimensional code reader) accounting type and quantity of goods and at the same time storing additional data in the system (if such data is needed by the customer). The proposed solution will significantly increase the security of the flow of goods through accounting goods on the supplier-customer route with accuracy of a single unit packaging by using (on unit packaging, outer packaging and pallets) the 2D codes containing information (number of delivery, number of palette, type/types of goods on the pallet with a unique number and unit and outer packaging.

Accepting/accounting a position on the recipient's terminal is also a confirmation of acceptance of delivery and will be sent online to the management system of the supplier. Encryption of the data in two-dimensional code allows verification of the authenticity of origin of the goods through the use of an algorithm encrypted in the two-dimensional code (manufacturer indication). Regionalization for the sake of the export business is also possible by quickly adding to the 2D code the region /country to which the goods are to be delivered.

In the present invention the two-dimensional codes located on the packaging allow the individual customer, after scanning the code on any mobile device, to go to an individual website of the product (the code can replace a product leaflet) and supplementation used by the customer with suggestions of personalized diet including the use of other dietary supplements on the basis of an interactive or smart survey available through the website. Verification the authenticity of the goods using of a two-dimensional code significantly increases and improves the ability to track batches of goods, and also gives the ability to quickly withdraw the product from the market on the basis of electronic information and verification of lot and package numbers even at an individual customer. The advantage is also the possibility of multi-language support. A customer, connecting via their mobile device by scanning the code of a specific language area, is directed to the product website (including leaflet) in his/her language version.

The advantages of two-dimensional codes representing each customized package include the possibility to add more information suitable for automatic reading on smaller surface, improved information security and encoding that takes into account detection and correction of errors. The specific construction of a two-dimensional matrix modular code allows using it on curved or bent surfaces. Matrix modular code can contain unique features and mechanisms that allow encoding not only the ASCII characters, but also characters from the Japanese, Cyrillic, Arabic, Greek and Hebrew alphabets.

Automated system according to the invention in an embodiment is shown in the enclosed drawings, in which:
Figure 1 illustrates an overall diagram of the automated storage and picking process of the invention,
Figure 2 shows a fragment of the automatic replenishment warehouse,

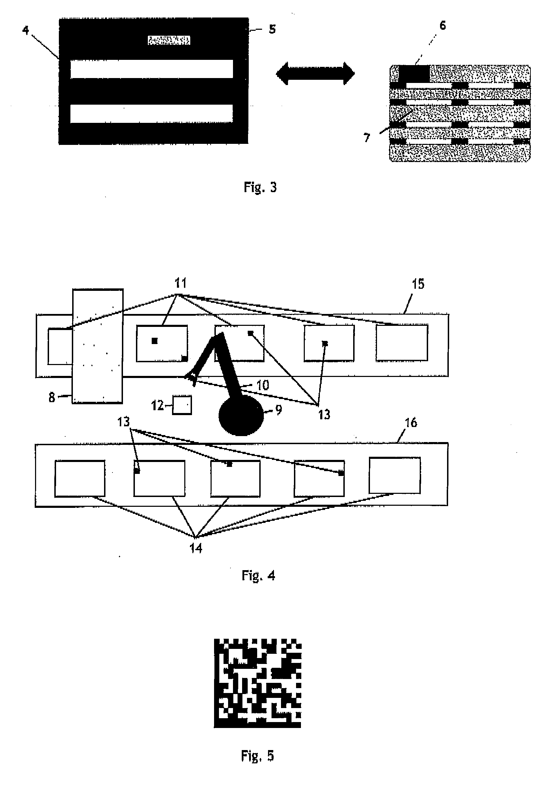

Figure 3 illustrates the communication process between RFID receiver and RFID tag during transfer of the goods.
Figure 4 shows schematically the automatic picking warehouse, and
Figure 5 illustrates an example of a two-dimensional code (Data Matrix type), containing information such as the product name, expiry date, lot no. and a unique number of unit packaging. Similarly, other logistic units such as pallets EUR.

### Working example

The storage and picking system of the present invention starts in the automatic pallet warehouse. The goods are delivered from the production or are coming from the suppliers in the inbound area. In this area, the goods are checked by a person. The check confirms if it is the right article in the right quality and quantity. The information about all entries is coming from the production or the supplier, while it can be also retrieved from a real-time IT system (ERP, MES, TMS).

In case that the pallet corresponds to the entry list the load unit is ready to be recorded into the warehouse management system. The pallets are transported to the infeed conveyor and registered automatically by a RFID (Radio-Frequency IDentification) tag, which is fixed on each pallet. A RFID receiver, which is integrated in the conveyor system, recognizes the load unit and sends the information to the warehouse management system.

From the moment of tagging the pallet with RFID onwards, the containers/goods/products will stay in the automatic system until they are needed in the picking area. The warehouse management system manages the entire goods/material flow and organizes all transports within the goods/material flow.

To ensure high reliability and the tracing of the goods in the warehouse, checks by the automatic Storage and Retrieval Machine (SRM) will be done along with every storage and retrieval cycle. The check will be done during transfer of the goods from the SRM to its target by a RFID receiver which is integrated in the telescopic fork.

Depending on the orders and requests of the automatic picking warehouse and picking system, the pallets leave the warehouse in direction of the automatic depalletizing.

The automatic warehouse for replenishment consists of the following elements: SRM feed (conveyor) 1 , Storage and Retrieval Machine (SRM) 2 and rack system 3. The Warehouse Management System (WMS) controls all movements in this system. The goods are coming from the conveyor lanes to the SRM. The SRM is responsible for storage and retrieval of the goods from the rack system. For each transfer from SRM to conveyor or rack system, an information flow between SRM and WMS is necessary. To ensure high reliability, innovative communication is considered and used in this system.

The transfer happens by a telescopic fork which is on the hoist unit of the SRM 4 and the hoist unit 4 is equipped with a RFID receiver 5. During the transfer the RFID receiver and the RFID tag 6 are communicating 7.

The information is directly transmitted to the WMS. The WMS checks this information. If the information is right, the WMS confirms and the SRM proceeds with the transfer. In case that the information is not corresponding to the WMS information, the system stops. The situation has to be checked by a person responsible for the system then. The present invention ensures that the goods are at the right place every time and mistakes in the process are avoided.

For the picking process the goods have to be in small containers, so that the picking robot is able to pick the goods. These containers are stored on pallets which are coming from the automatic replenishment warehouse.

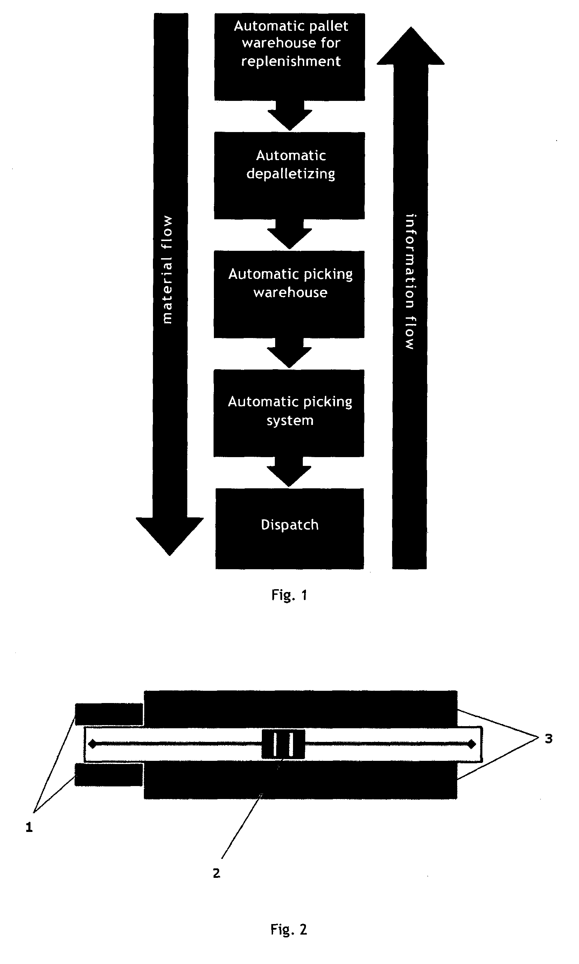

The pallets with goods are delivered by a conveyor system to the automatic depalletizing system. In this area, as presented in Fig. 2, an automatic robot retrieves each container 11 from a palette 7 and places it on a conveyor system and identifies it [a scanner reads the 2D code (including numbers of unit packages and individual numbers) which are on the containers allowing the container to be now identified in the automatic picking area], and subsequently the goods pass into the automated picking warehouse equipped with a 3D scanner 8 located above the conveyor belt 15 integrated with a robot 9 having an arm 10, which scans the containers 11 to allow the robot 9 to select unit packages 13 from the containers 11 , and the robot empties the containers 11 and puts the goods into the order boxes 14.

The system has an integrated error control system, wherein each unit package 13 is labelled with an individual two-dimensional code scanned from the top wall surface of the unit package 13 by a 3D scanner 8, and if scanning of the two- dimensional code by the 3D scanner 8 is not possible, the robot 9 places the unit package 13 in a control device 12 that scans the two-dimensional code from the other walls of the unit package 13.

The containers are transported from the automatic depalletizing to the automatic picking warehouse.

The automatic picking warehouse is necessary as a buffer for the automatic picking system. Depending on the picking orders, the automatic picking systems will receive orders of the warehouse management about the required articles/goods. The automatic picking warehouse manages the optimal material flow of the goods and transports them to the picking system by a conveyor. The automatic picking system is responsible for preparation of the customer orders. The warehouse management system orders the right containers with the right goods to the picking system which corresponds to the customer's order.

A 3D scanner scans the containers so the robot is able to pick the goods out of the containers. The robot picks out the containers and puts the goods into the order boxes. To ensure and confirm that the right goods are picked into the boxes in the right order, the robot automatically scans the labels of unit packages, outer packages or different sets of unit and outer packages. After finishing an order the warehouse management system is sending the order to the dispatch area by conveyor. At the same time the information of the order is going to the ERP system. The ERP system sends the information directly to the customer, so that they are informed about the status of their order as well as receive other data included in the 2D code.

A warehouse management system is responsible for the entire process. The goods are entering the system at the automatic replenishment warehouse and undergo control before the dispatch area. Tracking is done along the whole process by the warehouse management system and there is no handling of goods by employees. The warehouse management system can deliver information about all the goods anytime. The customer will be informed about the status of their order via the Internet.

## Claims

1. Automated storage and picking system, especially for pharmaceuticals and/or dietary supplements, consisting of:
a. storage unit package (13) of goods placed in containers (11),
b. means of transport to enable the movement of goods within the storage space, in particular using a storage/retrieval machine (2),
c. automatic depalletizing system where a robot retrieves each container (11) from a palette (7) and places it on a conveyor system and identifies it, and subsequently the goods pass into the automated picking warehouse equipped with a 3D scanner (8) located above the conveyor belt (15) integrated with a robot (9) having an arm (10), which scans the containers (11) to allow the robot (9) to select unit packages (13) from the containers (11), and the robot empties the containers (11) and puts the goods into the order boxes (14),
**characterized in that** it has an integrated error control system, wherein each unit package (13) is labelled with an individual two-dimensional code scanned from the top wall surface of the unit package (13) by a 3D scanner (8), and if scanning of the two- dimensional code by the 3D scanner (8) is not possible, the robot (9) places the unit package (13) in a control device (12) that scans the two-dimensional code from the other walls of the unit package (13).

2. Automatic system according to claim 1 , **characterized in that** the control device (12) has the cuboid shape preferably open on the top, and two-dimensional code scanners are located in its walls.

3. Automatic system according to claim 1 , **characterized in that** the error control system verifies the correct transfer of the goods to the automatic warehouse for replenishment via a telescopic fork located on the hoist unit (4) of the storage /retrieval machine (2), thanks to the fact that the hoist unit (4) is equipped with a RFID receiver (5) which during the transfer of the goods is communicating with a RFID tag (6) that is preferably placed on the pallet (7).

4. Automatic system according to claim 1 , **characterized in that** the error control system verifies the correct picking due to the fact that the robot automatically identifies containers (11) using a two-dimensional code located on the container (11).

5. Automatic system according to any of claims from 1 to 4, **characterized in that** the position of each unit package (13) and/or pallet (7) and/or storage container (11) is recorded in a computer system.

6. Automatic system according to claim 5, **characterized in that** the computer system allows the end customer to obtain information on the unit package (13) of the product, preferably via the Internet.

## Patentansprüche

1. Automatisches System für Lagerung und Sortierung, insbesondere von Pharmaprodukten und Supplementen, bestehend aus:
a. Lager für Einheitsverpackungen (13) für Artikel, die sich in Behältern (11) befinden,
b. Transportmittel zum Transport der Artikel im Bereich des Lagerraums, insbesondere mittels Lagermaschine/Rückgewinnungsmaschine,
c. Automatisches System für Palettenentleerung, wobei der Roboter jeden Behälter (11) abnimmt und im Förderersystem platziert und ihn identifiziert, wobei anschließend die Artikel zum automatischen Sortierlager befördert werden, das mit dem 3D-Scanner (8) ausgerüstet ist, der über dem Bandförderer (15) angebracht ist, der mit dem Roboter (9) integriert ist und mit dem Arm (10) ausgerüstet ist, der die Behälter (11), scannt, damit der Roboter (9) Einheitsverpackungen (13) aus den Behältern (11) wählen kann, wobei der Roboter anschließend die Behälter (11) entleert und die Artikel in Schachteln (14) platziert,
**dadurch gekennzeichnet, dass** es mit dem zweidimensionalen Fehlerkontrollsystem ausgerüstet ist, wobei jede Einheitsverpackung (13) mit einer Etikette mit zweidimensionalem Code versehen ist, der durch den 3D-Scanner von der Oberfläche der oberen Wand der Einheitsverpackung (13) gelesen wird; kann der zweidimensionale Code durch den 3D-Scanner (8) nicht abgelesen werden, platziert der Roboter (9) die Einheitsverpackung im Kontrollgerät (12), das den zweidimensionalen Code von anderen Wänden der Einheitsverpackung (13) abliest.

2. Automatisches System nach Anspruch 1, **gekennzeichnet dadurch, dass** das Kontrollgerät (12) quaderförmig ist, bevorzugt offen nach oben, und mit einem Scanner für zweidimensionale Codes an Wänden ausgerüstet ist.

3. Automatisches System nach Anspruch 1, **gekennzeichnet dadurch, dass** das Fehlerkontrollsystem die ordnungsgemäße Anbringung der Artikel zum automatischen Lager Zur Ergänzung mittels Teleskopgabeln am Hubwerk (3) der Lager-/Rückgewinnungsmaschine (2) prüft, indem das Hubwerk (4) mit dem RFID-Empfänger (5) ausgerüstet ist, der beim Anheben der Artikel mit der RFID-Etikette kommuniziert, die bevorzugt an der Palette (7) angebracht ist.

4. Automatisches System nach Anspruch 1, **gekennzeichnet dadurch, dass** das Fehlerkontrollsystem die ordnungsgemäße Sortierung prüft, wobei der Roboter die Behälter (11) automatisch identifiziert, indem er den zweidimensionalen, auf dem Behälter (11) angebrachten Code automatisch identifiziert.

5. Automatisches System nach einem der Ansprüche 1 bis 4, **gekennzeichnet dadurch, dass** die Position jeder Einheitsverpackung (13) und/oder Palette (7) und/oder des Lagerbehälters (11) im Computersystem erfasst wird.

6. Automatisches System nach Anspruch 5, **gekennzeichnet dadurch, dass** das Computersystem dem Endverbraucher Informationen über Einheitsverpackungen (13) des Produkts, bevorzugt über Internet, bereitstellt.

## Revendications

1. Système automatique de stockage et de tri, en particulier des produits pharmaceutiques et des compléments alimentaires, composé de :
a. Un entrepôt d'emballages unitaires (13) des articles se trouvant dans les conteneurs (11),
b. Un moyen de transport permettant le déplacement des articles dans l'espace de stockage, et en particulier en utilisant une machine de stockage / de récupération,
c. Un système de décharge automatique des palettes, où le robot prend chaque conteneur (11) de la palette et le place sur le système des convoyeurs, et l'identifie, et ensuite les articles sont transférés à un entrepôt de tri automatisé, équipé d'un scanner 3D (8) disposé au-dessus du convoyeur à bande (15) intégré avec le robot (9), équipé d'un bras (10), qui balaye les conteneurs (11) pour que le robot (9) puisse sélectionner les emballages unitaires (13) des conteneurs (11), puis le robot vide les conteneurs (11) et place les articles dans les boîtes (14),
**Caractérisé en ce qu'**il est équipé d'un système intégré de contrôle d'erreurs, où chaque emballage unitaire (13) est marqué avec une étiquette avec un code individuel bidimensionnel balayé par un scanner 3D depuis la surface de paroi supérieure de l'emballage unitaire (13), et si le balayage du code bidimensionnel par le scanner 3D (8) est impossible, alors le robot (9) place un emballage unitaire dans le dispositif de commande (12) qui scanne un code bidimensionnel à partir d'autres parois d'emballage unitaire (13).

2. Système automatique selon la revendication 1, **caractérisé en ce que** le dispositif de contrôle (12) a une forme d'un parallélépipède, de préférence ouvert en haut et est muni de scanners de codes à barres bidimensionnels situés sur ses parois.

3. Système automatique selon la revendication 1, **caractérisé en ce que** le système de contrôle d'erreurs vérifie le déplacement correct des articles vers l'entrepôt automatique pour compléter avec une fourche télescopique située sur l'ensemble de levage (4) la machine de stockage / de récupération (2), grâce à ce que l'ensemble de levage (4) est muni d'un récepteur RFID (5) qui, pendant le transfert des articles communique avec une étiquette RFID (6), qui, de préférence, est placée sur une palette (7).

4. Système automatique selon la revendication 1, **caractérisé en ce que** le système de contrôle d'erreurs vérifie le tri correct par le fait que le robot identifie automatiquement les conteneurs (11) en utilisant un code bidimensionnel mis en place sur le conteneur (11).

5. Système automatique selon l'une quelconque des revendications 1 à 4, **caractérisées en ce que** la position de chaque emballage unitaire (13) et / ou palette (7) et / ou conteneur de stockage (11) est enregistrée dans le système informatique.

6. Système automatique selon la revendication 5, **caractérisé en ce que** le système informatique permet à l'utilisateur final d'obtenir des informations sur les emballages unitaires (13) du produit, de préférence par l'intermédiaire de l'Internet.
